# EUROPEAN PATENT APPLICATION

(11) **EP 4 394 449 A1**
(43) Date of publication of application: **03.07.2024**
(21) Application number: 22217122.5
(22) Date of filing: 29.12.2022
(51) Int. Cl.: G01S 19/37

(54) **SYSTEMS AND METHODS FOR COMPUTING CORRELATION IN A NAVIGATION RECEIVER**

(71) Applicant: Septentrio N.V., 3001 Leuven (BE)
(72) Inventor: De Wilde, Wim, 3050 Oud-Heverlee (BE); Sleewaegen, Jean-Marie, 1090 Brussels (BE)
(74) Representative: AWA Benelux

(57) **Abstract**

A correlator module (320) is configured to perform a correlation between first batches of received signal samples and second batches of code samples of a local replica of a spreading code. The correlator module comprises a carrier phase generator circuit (324), a code generator circuit (326), a correlation computing circuit (328) and an accumulator circuit (323). A signal correlator system comprises a system bus, a central processing module and the correlator module connected to the system bus. The first batches are fed as words (310) to the correlator module via the system bus. The correlator module is configured to trigger correlation operations of the correlation computing circuit each time one of the words is fed by the system bus. A method is described to carry out the above operations.

## Description

### Technical field

The present disclosure is related to digital circuits, computer systems and related methods for computing correlation of baseband samples from a satellite navigation receiver with a local replica of a code sequence of a particular satellite.

### Background art

Global Navigation Satellite Systems (GNSS) are widely used to provide position, velocity and time to any user on or near the Earth's surface. A GNSS comprises, among other things, a constellation of multiple navigation satellites (GNSS satellites) which transmit dedicated navigation signals also called 'ranging signals'. Most known is the Global Positioning System (GPS) developed by the United States. Other systems include the European Galileo system, the Russian GLONASS and the Chinese BeiDou system.

The satellites of a satellite-based positioning system transmit signals on several frequency bands. The carriers are modulated by pseudo-random (PRN) spreading codes that are unique to each satellite. For example, the latest generation of GPS satellites transmits on the L1, L2 and L5 carriers at 1575.42MHz, 1227.6MHz and 1176.45MHz respectively. Each carrier may be modulated by several PRN codes. For example, for GPS satellites, the L1 carrier is modulated by the L1C/A code, the L1P(Y) code and the L1C code. A PRN code consists of a long sequence of "0" or "1" chips, which respectively multiply the carrier with 1 and -1, a modulation scheme known as binary phase-shift keying (BPSK). For example, the GPS L1C/A code is a sequence of 1023 chips unique to each satellite. Some signals, such as GPS-L2CM, are time-multiplexed with other signals. The PRN code of these signals is blanked during the interval that the other signals are transmitted. Such blanking can be interpreted as a multiplication of the carrier by 0.

The PRN code on most civilian signals is periodic. To enhance security, military signals and some next-generation signals use a non-periodic sequence generated by a cryptographic encryption algorithm. Other next-generation signals overrule selected chips of the default periodic sequence with an encrypted signature sequence, which gets only known to the user after some time (seconds to minutes), requiring signal storage and post-processing to confirm signal authenticity. For instance, the GPS L1C signal uses a 10230-chip repeating PRN code, of which selected chips may be modified according to a cryptographically-generated non-periodic sequence. This so-called watermark code is used to validate signal authenticity (GPS Chimera). The applicable key of the cryptographic algorithm to reconstruct the watermark is only made available long after signal transmission.

In GNSS receivers, the different frequency bands are first amplified, filtered and downconverted to a low intermediate frequency (IF) in frontend circuits. In multi-band receivers, each band is downconverted in a dedicated frontend. The frontends may also contain means to mitigate RF signal impairments such as interferences. In digital receivers, each frontend outputs a stream of digital samples at a rate dependent on the Nyquist frequency of the frontend filters. Depending on the receiver frequency plan, the IF sample rate Fs may vary from a few MHz to a few tens of MHz.

The IF samples contain the signal from all the satellites transmitting in the corresponding frequency band. A GNSS receiver identifies an individual satellite by correlating the IF samples with a local replica of the PRN code sequence of that satellite, after removal of any residual carrier.

In hardware-defined GNSS receivers (HDR), the correlation operations are performed in dedicated hardware channels. A HDR contains a large number of hardware channels, each of them computing correlation in respect of a single GNSS signal. The main advantage of HDR architectures is the processing speed, at the expense of hardware complexity and flexibility, since all operations are hardcoded in hardware.

In so-called software-defined GNSS receivers (SDR), the correlation operations are performed in software running on one or more central processing unit (CPU) cores. The SDR approach is very flexible as the correlation algorithm is coded in software, but it puts a large burden on the CPU, especially when the number of signals to be tracked is large. For each tracked signal, the operations performed in software typically include:
- Reading IF samples from RAM;
- Updating the carrier and local code phases;
- Rotating the IF samples;
- Correlating the IF samples with the local PRN code;
- Accumulating the correlation.

SDR receivers are therefore primarily used in post-processing mode, where batches of IF samples are first stored in RAM, and correlation is computed subsequently with no strict real-time constraints.

T. Humphreys & al "Exploiting Multicore Technology in Software-Defined GNSS Receivers" ION GNSS 2009 conference demonstrated the advantages of leveraging the multi-core architecture of some processors to optimize towards real-time operation.

Petovello et al "Architecture and Benefits of an Advanced GNSS Software Receiver" Journal of Global Positioning Systems (2008) Vol. 7, No. 2: 156-168 use the massively parallel processing capability of Graphics Processing Units (GPU) to optimize the SDR throughput.

D. Miralles & D.M. Akos "A SIMD intrinsic correlator library for GNSS software receivers" GPS Solutions (2019) 23:72 propose leveraging single-instruction-multiple-data (SIMD) of modern processors to perform operations on multiple IF samples in a single instruction.

These techniques rely on advanced CPU/GPU hardware. They are power hungry and expensive and not suitable for most GNSS applications.

Tran et al, "Programmable custom multi-core architectures for multi-constellation GNSS receiver" IGNSS Symposium 2015*,* describe two architectures. The first architecture is a software-defined radio designed to process a single satellite signal, built around a proprietary microcontroller core, which gathers words with vectorized IF samples data and local data. Local code and carrier are generated by dedicated peripherals at a local system bus. This process is strictly timed by processor interrupts at a rate equal to the sampling rate times the number of samples in a vector. The correlation process is done in software. This is very resource intensive as it requires a microcontroller with dedicated instruction and data memory for each signal and a large proprietary code generation circuit with associated code memory holding one or multiple full PRN sequences.

In a second architecture, a custom core is combined with a dedicated programmable correlator that can be dynamically reconfigured by the core controller to process different GNSS signals. The correlator is a pipelined channel running at a clock rate which is an integer multiple of the sampling rate. The pipeline is used in a time-interleaved manner to process multiple signals on the same hardware resources. The IF samples are not sourced via the CPU system but via a dedicated data path (as in a classical correlator), entering the pipeline in a non-vectorized and strictly timed way. The data is vectorized at correlator level to take advantage of parallel correlation techniques. A microcontroller accesses multiple pipelines via a system bus to configure the numerically controlled oscillators (NCOs), download respective spreading codes to an internal memory and gather correlation and timing data in a shared RAM block. The signal to be correlated enters the correlator channel in a tapped delayed manner until an in-phase and quadrature buffer are filled and correlation is performed. While the time interleaving and parallel correlation drastically reduces hardware resource needs, it is very similar to a matrix of classical GNSS correlators from system point of view. It does not reach the flexibility level of a software defined radio, as its design is tailored towards specific GNSS sampling rates and code lengths. It is not suitable to handle non-periodic PRN codes or signals relying on post-processing like watermark codes.

### Summary

There is hence a need in the art to combine the flexibility of a software-defined radio with the efficiency of dedicated hardware, reducing the complexity, power consumption and CPU overhead of a navigation receiver. There is a need in the art to provide a navigation receiver which enables to perform correlation computations both in real-time and in post-processing mode in a more efficient and/or more flexible manner, e.g. with optimized CPU involvement and reduced system requirements.

According to a first aspect of the disclosure, there is therefore provided a signal correlator system, a correlator module for use in the signal correlator system and a navigation receiver comprising the signal correlator system, as set out in the appended claims.

A correlator module according to aspects of the present disclosure is configured to perform a correlation between first batches of received signal samples and second batches of code samples of a local replica of a spreading code. The correlator module comprises a carrier phase generator circuit, a code generator circuit, a correlation computing circuit and an accumulator circuit. The carrier phase generator circuit is configured to determine carrier phases corresponding with each of the received signal samples of the first batches. The code generator circuit is configured to determine each of the second batches of the code samples. The correlation computing circuit is configured to correlate the received signal samples of one of the first batches with the code samples of a respective one of the second batches. These correlation operations can comprise or consist of a rotation of the received signal samples by respective carrier phases provided by the carrier phase generator circuit to obtain rotated samples and a multiplication by respective code samples of the local replica provided by the code generator circuit to obtain a correlation output for each of the received signal samples. The accumulator circuit is configured to accumulate correlation outputs of the correlation computing circuit in respect of a plurality of the first batches. The correlator module is configured to be connected to a system (data) bus of a computer system. The computer system is advantageously implemented with executable program code configured to feed the first batches as words to the correlator module via the system bus. The words each consist of a predetermined number of the received signal samples. The correlator module is configured to trigger operations configured to obtain correlation outputs for each of the received signal samples of a word, each time one of the words is fed by the system bus. These operations can include one or more of: correlation operations of the correlation computing circuit and state updates of the code generator circuit and/or the carrier phase generator circuit. The correlation computing circuit is advantageously configured to perform correlation operations on all the received signal samples of a word in parallel. It will be appreciated that the received signal samples advantageously represent complex values, such as comprising or consisting of an in-phase component and a quadrature component.

A signal correlator system according to aspects of the present disclosure, which can refer to the above computer system, comprises a system (data) bus and a central processing module (CPU) connected to the system bus. The signal correlator system further comprises at least one of the above correlator module connected to the system bus. The signal correlator system is configured to feed the first batches as words to the correlator module via the system bus. To this end, the signal correlator system can be implemented with corresponding executable program code, executable by the CPU or other suitable devices of the signal correlator system, such as a Direct Memory Access device. The words to be fed to the correlator module can be retrieved from any local or remote data storage system, such as from a memory module of the signal correlator system, or from a remote (data) network.

Hence, in the above correlator module and signal correlator system, the correlation computing operations (of the correlation computing circuit of the correlator module) on the received signal samples of a word are triggered or initiated by the feeding/writing of that same word to the correlator module. One advantage of so doing is that the operation of the correlator module is fully asynchronous, contrary to the prior art (e.g. Tran et al. cited above). The rate at which the correlator module performs correlations is entirely dependent on the rate at which words are written to it by the system bus, and this rate does not need to be a fixed rate, such as a clock rate. Rather, if higher-priority tasks need to be performed by the computer system, the feeding of new words can be interrupted. This need not be a problem and correlation can simply resume at the next write access. As a result, a very flexible correlator module and signal correlator system is obtained which is suitable both for real-time and for post-processing operations.

Advantageously, the correlator module is configured to trigger an update of a state of the carrier phase generator circuit and of a state of the code generator circuit each time one of the words is fed by the system bus. The state update of the carrier phase and code generator circuits can be effected prior to, or, more advantageously, following execution of the correlation operations of the correlation computing circuit in respect of the one of the words. By so doing, feeding of a word to the correlator module triggers a complete iteration of the state(s) of the correlator module, so that the correlator module is prepared for the next word.

Advantageously, such a way of operating overcomes the need to have large data storage structures in the correlator module. Advantageously, the correlator module comprises an input data structure configured to receive the words from the system bus, and being coupled to the correlation computing circuit. The input data structure advantageously is configured to store a single word at a time, such as in an input register having a size equal to a bit size of one word.

Advantageously, the system bus has a width being an integer multiple of a bit size of each of the words. Yet advantageously, the system bus has a width equal to a bit size of each of the words.

Advantageously, the correlator module comprises a set of memory data structures, such as registers, configured to store values defining states of the carrier phase generator circuit and/or the code generator circuit. Initial values defining an initial state of the carrier phase generator circuit and/or the code generator circuit are advantageously configured to be written to the memory data structures via the system bus. The initial value advantageously refers to a value in respect of a first word of received signal samples processed by the correlator module. The correlator module is further advantageously configured to update the states of the carrier phase generator circuit and/or the code generator circuit for successive words of a batch of words that are successively processed by the correlator module autonomously, advantageously without intervention from the CPU or other device, particularly without requiring an external write operation. Advantageously, the correlator module comprises an output data structure, such as a register, configured to be readable by the system bus. The correlator module is configured to write the output data structure with an accumulated correlation output of the accumulator circuit. Optionally, the correlator module is configured to write a final (or current) state of the carrier phase generator circuit and/or of the code generator circuit to the output data structure. Alternatively, the final (current) states of either one or both generator circuits can be accessible by the system bus in the memory data structures, e.g. the memory data structures can be read/write registers. These final states of the carrier phase generator circuit and/or of the code generator circuit can advantageously be utilized for computing correlation for a next batch of received signal samples. This offloads the CPU as it does not need to compute the initial state of the next batch of received signal samples, e.g. where correlations are performed batch-wise in relation to multiple navigation signals (e.g. multiple satellites).

Feeding words by the system bus to the correlator module can be controlled/supervised by the CPU. Alternatively, the signal correlator system can comprise a direct memory access control module operably coupled to the system bus, and possibly a system memory module coupled to the system bus. The direct memory access control module is advantageously configured to be implemented with executable program code configured to execute a sequence of transfer of the words, e.g. from a local or remote data storage device such as the system memory module, to the correlator module. Advantageously, the executable program code is configured to write initial values defining initial states of the carrier phase generator circuit and/or of the code generator circuit to the memory data structures before each sequence of transfer and/or the executable program code is configured to retrieve the accumulated correlation output from the output data structure following the sequence of transfer. Delegating read/write tasks to a direct memory access control module reduces CPU overhead and further improves system flexibility and efficiency.

Advantageously, the system is configured to maintain a circular queue of buffers of the received signal samples in a data storage device such as a system memory module, e.g. via the direct memory access control module. The signal correlator system is implemented with executable program code advantageously configured to execute a sequence of instructions configured to transfer the received signal samples as words from one or more buffers of the circular queue to the correlator module and to push new ones of the received signal samples into another one of the buffers in the circular queue, e.g. thereby replacing received signal samples that have already been transferred. Circular queues are efficient in real-time processing mode since they reduce the amount of data storage that is required. The buffers advantageously have equal size.

A navigation receiver according to aspects of the present disclosure comprises the above signal correlator system and further comprises an input device configured to capture a radio frequency signal, preferably a radio frequency antenna, and a frontend circuit coupled to the input device and configured to convert the radio frequency signal to a stream of the received signal samples. Advantageously, the navigation receiver comprises a formatter circuit configured to pack the stream of the received signal samples in the first batches. The formatter circuit can be coupled to the system bus.

According to a second aspect of the present disclosure, there are provided methods of correlating received signal samples with code samples, as set out in the appended claims. A method of correlating received signal samples, which may be navigation signal samples, such as GNSS navigation signal samples, with code samples of a spreading code replica according to aspects of the present disclosure comprises packing first batches of the received signal samples as words, wherein each of the words consists of a predetermined number of the received signal samples and feeding the words to a signal correlator circuit, such as the above correlator module, via a system bus. For the received signal samples of each word, respective carrier phase values and respective code samples of the spreading code replica are determined. A correlation of the received signal samples of each word with the respective code samples is computed by the signal correlator circuit, obtaining a correlation output. Computing the correlation can comprise rotating the received signal samples by respective carrier phases and multiplication of the rotated samples by respective code samples of the spreading code replica. The correlation outputs computed in respect of a plurality of the words are accumulated, obtaining an accumulated output. Feeding a respective word to the signal correlator circuit triggers computing the correlation of the received signal samples of the respective word by the signal correlator circuit.

Advantageously, the carrier phase values and the code samples of the spreading code replica are updated each time one of the words is fed to the signal correlator circuit, such as before, during or advantageously after computing the correlation of the received signal samples of the respective word. In the latter case, advantageously, computing the correlation of the received signal samples of the respective word by the signal correlator circuit triggers updating the carrier phase values and the code samples of the spreading code replica in respect of a subsequent one of the words. As a result, the signal correlator circuit prepares for the next word that will be fed to it.

Advantageously, the above method can be executed recursively on the received signal samples in respect of spreading code replicas relating to different navigation signals. This may be performed sequentially on a same signal correlation circuit, or in parallel on multiple signal correlation circuits.

The above methods can be implemented in the correlator module, signal correlator system and navigation receiver described above. According to aspects of the present disclosure, the correlator module and executable program code are provided. The executable program code, when implemented on a computer system, such as the signal correlator system, is configured to carry out any of the methods according to the present disclosure.

According to a further aspect of the present disclosure, there is provided a method of operating a direct memory access control module to control data transfer via a system bus, to and from, a correlation computing circuit, wherein the correlation computing circuit is configured to compute a correlation of received signal samples with code samples of a spreading code replica, e.g. as described in the above methods. The direct memory access control module executes a first instruction to write initial values defining an initial state of the correlation computing circuit onto an internal data structure of the correlation computing circuit. The initial state can comprise an initial state of a carrier phase and/or an initial state of a code phase. The first instruction can comprise writing at least a portion of the spreading code replica to a data memory structure of the correlation computing circuit. The direct memory access control module executes a second instruction to feed (a predetermined number of) words sequentially to the correlation computing circuit, wherein the words each consist of a predetermined number of the received signal samples. The direct memory access control module can retrieve the words from a buffer storing the received signal samples, e.g. in a local or remote data storage device. The words can be retrieved starting from a predetermined word index in the buffer, which word index may be dependent on the spreading code replica to be correlated with. The direct memory access control module executes a third instruction to retrieve a correlation output from an output data structure of the correlation computing circuit, and possibly to retrieve end states of the correlation computing circuit. Advantageously, the first, second and third instructions are executed as a sequential chain of operations. Advantageously, the first, second and third instructions are executed recursively in respect of a plurality of spreading codes, e.g. relating to different navigation signals. The method of operating the direct memory access control module, particularly the first, second and third instructions, can be implemented as executable program code, such as for execution in the signal correlator system described above.

### Brief description of the drawings

Aspects of the invention will now be described in more detail with reference to the appended drawings, wherein same reference numerals illustrate same features and wherein:
Figure 1 represents a block diagram of a GNSS navigation receiver;
Figure 2 represents a block diagram of a correlator module of a GNSS receiver;
Figure 3 represents a block diagram of a GNSS receiver according to aspects of the present disclosure;
Figure 4 graphically represents 4-bit complex valued intermediate frequency samples packed in a 32-bit word;
Figure 5 represents a flow diagram of a method implemented by a correlation device according to an aspect of the present disclosure;
Figure 6 represents a block diagram of a correlation device according to an aspect of the present disclosure, for use in the GNSS receiver of Fig. 3;
Figure 7 represents a block diagram of a carrier phase generator for use in the correlation device of Fig. 6;
Figure 8 represents a block diagram of a code phase generator for use in the correlation device of Fig. 6;
Figure 9 represents a flow diagram of a control sequence of the correlation device of Fig. 6;
Figure 10 represents a diagram illustrating how IF sample words can be read from a buffer with an offset to compute correlation for different satellites;
Figure 11 represents a flow diagram of a DMA chain for computing correlation values for different satellites;
Figure 12 represents a diagram of memory blocks associated to the control of the correlation device through a DMA chain;
Figure 13 represents a diagram of a circular queue of multiple sample buffers in RAM which sample buffers are filled successively via DMA transactions;
Figure 14 represents a diagram illustrating correlation timing in a triple IF buffer;
Figure 15 represents a flow diagram of a DMA chain for computing correlation values for different satellites including track loop iteration;
Figure 16 represents a diagram of DMA operations in continuous real-time mode, using a triple-buffer architecture;
Figure 17 represents a block diagram of a GNSS receiver according to an aspect of the disclosure comprising a multilayer bus structure.

### Detailed description

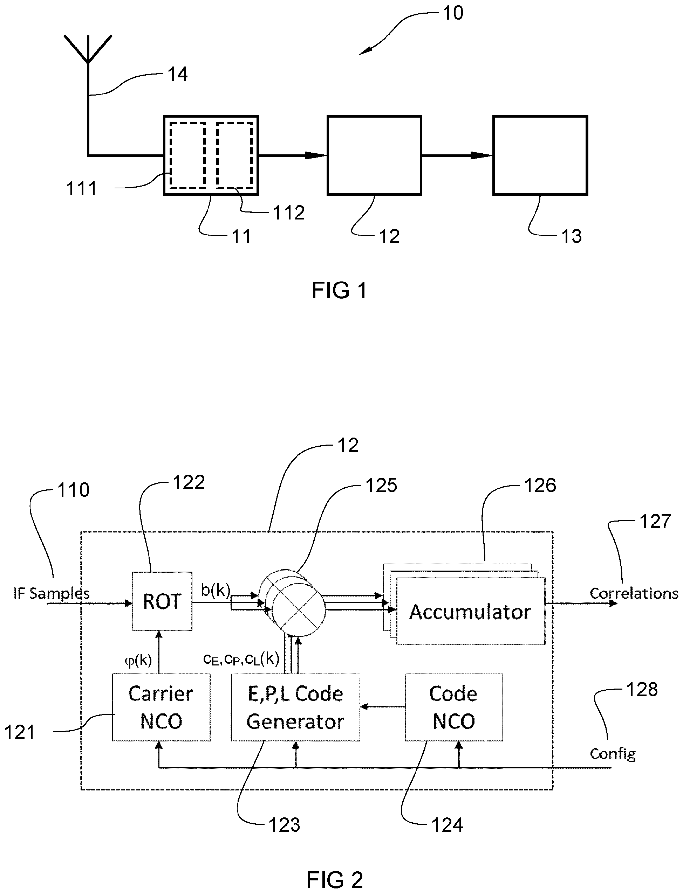

Referring to Fig. 1, a GNSS navigation receiver 10 comprises a radio frequency (RF) antenna 14 configured to receive at least one RF signal in one or more GNSS frequency bands. This RF signal comprises the signal from all the satellites transmitting in the corresponding frequency band. The RF signal is processed in a Front End module 11, including a downconverter 111 to convert the RF signal to an intermediate frequency (IF) signal and an analog to digital converter (ADC) 112 to convert the IF signal to a stream of digital IF samples. The IF samples, comprising the signals from all the satellites transmitting in the corresponding frequency band, are transferred to a correlator module 12. Correlator module 12 identifies an individual satellite by correlating the IF samples with a local replica of the PRN code sequence of that satellite, after removal of any residual carrier. Correlator module 12 can perform correlation operations recursively to identify the signals from multiple satellites emitting in a specified frequency band. The output of correlator module 12 is fed to navigation module 13, where it is processed for navigation purposes.

Referring to Fig. 2, correlator module 12 implements a correlation process to evaluate IF samples obtained from the RF signal in respect of one or more specific GNSS signals. The IF samples 110 are typically presented in the form of complex l+jQ values, with the in-phase I and quadrature Q components coded on a small number of bits. For example, if the I and Q components are each coded on 2 bits, each complex sample is 4-bit wide. A carrier phase replica ϕ(k) is generated, for example in a numerically-controlled oscillator (NCO) 121. In rotator block 122, the complex IF samples are rotated by -ϕ(k), to produce baseband samples b(k). A code generator 123 generates a punctual PRN code replica c_{P}(k) at a phase controlled by the code NCO 124. Possibly, further code replicas are generated by code generator 123 at fixed phase delays with respect to cₚ(k). In some examples, at least one early replica c_{E}(k) (slightly) advanced with respect to c_{P}(k) by a predetermined offset and/or at least one late replica c_{L}(k), (slightly) delayed with respect to c_{P}(k) by the predetermined offset are generated. The code generator 123 can comprise a logic circuit configured to generate the code chips, or it can be configured to read the code chips from a memory. In multiplier block 125, the baseband samples b(k) are multiplied by each of the PRN code replica(s) c_{P}(k), c_{E}(k) and c_{L}(k) generated by code generator 123. The output(s) of multiplier block 125 is/are accumulated over a time period T in accumulator 126. The accumulation value thus obtained represents the correlation 127 between the input IF samples and the carrier and code replicas.

The correlation amplitude will be maximum when the phase of the carrier and code replicas are aligned with the carrier and code phase of the satellite signal of interest in the IF samples. The correlation values 127 can be used as input to carrier and code tracking loops (not shown), which periodically adjust the carrier and code NCO frequency, e.g. via configuration signals 128, to keep their phase synchronized with the incoming signal of interest. This process is known as signal tracking. It is well known in the art and not further documented here.

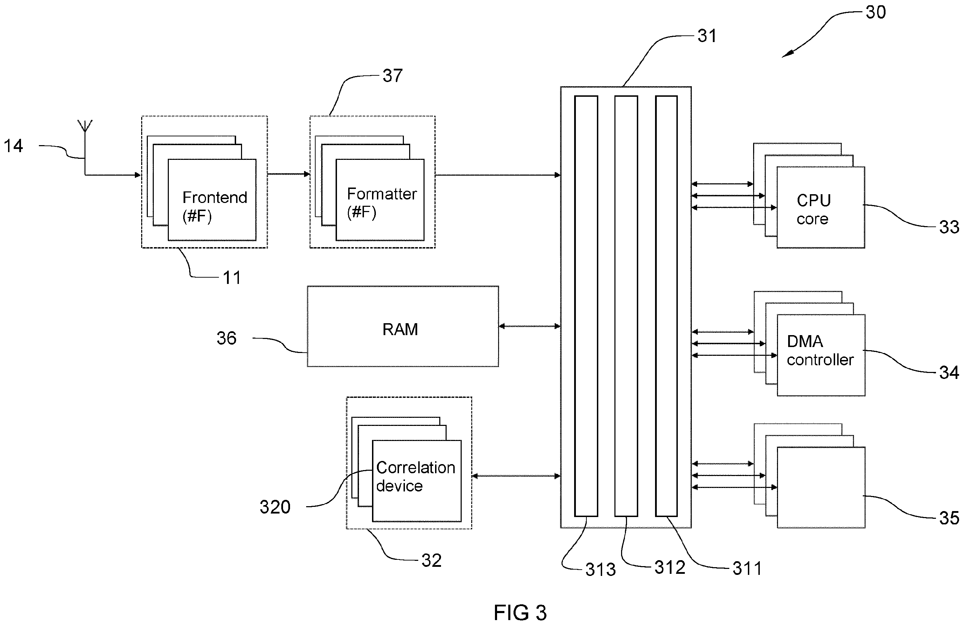

Referring to Fig. 3, a GNSS receiver architecture 30 according to the present disclosure, comprises a central processing unit (CPU) 33, comprising one or more cores, a system memory (RAM) module 36, possibly a Direct Memory Access (DMA) controller module 34, comprising one or more DMA controllers configured to control direct read and/or write access to RAM module 36, and possibly a peripheral interface controller module 35, comprising one or more control devices for controlling peripheral interfaces such as universal serial bus (USB), universal asynchronous receiver-transmitter (UART), etc. All the above modules are configured to communicate between each other through a system bus structure. System bus 31 allows devices in the computer system of receiver 30 to access other devices in the system, transferring system data words (e.g. 32 or 64 bit) and using an addressing system (e.g. 32-bit address). System bus 31 can comprise a data bus 311, an address bus 312 and a control bus 313 as known in the art. In some systems, the system bus 31 handles a single access at a time. The system bus 31 can be multilayered, in which case, multiple transactions can be done/handled in parallel, provided the endpoints of these transactions are disjoint. Examples of suitable system bus architectures are Advanced Microcontroller Bus Architecture (AMBA^{®}), which includes several sub-protocols suitable for a particular purpose (Advanced High-performance Bus (AHB), Advanced eXtensible Interface (AXI), Advanced Peripheral Bus (APB)) and Wishbone.

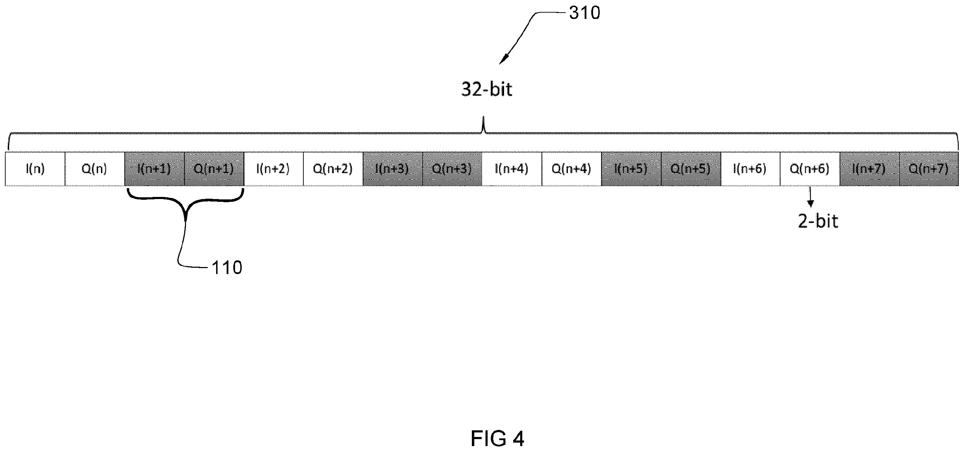

The GNSS receiver 30 further comprises a frontend module 11 comprising F frontends, where F is the number of supported frequency bands. F may for example be equal to 1 for a single-band L1-only receiver, or 3 for a three-band L1-L2-L5 receiver. Each of the frontends outputs I&Q digital IF samples at the respective IF sampling rate Fs. The formatter module 37 comprises a formatter circuit for each frontend, which packs the IF sample output stream from the respective frontend into words compatible with the word size of the system memory. The words output by formatter module 37 are written to a buffer in RAM module 36. For example, if the frontend produces 4-bit IF samples (e.g. 2-bit I and 2-bit Q), and the RAM word size is 32 bits, the formatters would group eight successive IF samples in 32-bit words. The RAM module 36 hence would comprise a succession of 32-bit IF sample words, each word containing eight IF samples. The format of such an IF sample word 310 is illustrated in Fig. 4, where l(n) and Q(n) are the real and imaginary component of the n^{th} IF sample 110.

The GNSS receiver 30 further comprises a correlation module 32. Unlike prior art software defined receivers, where correlations are computed in software running on the CPU 33, in receivers of the present disclosure an independent and dedicated device - the correlation module 32 - is connected to the system bus 31 to perform correlation computations on the IF samples 110 and to offload the CPU.

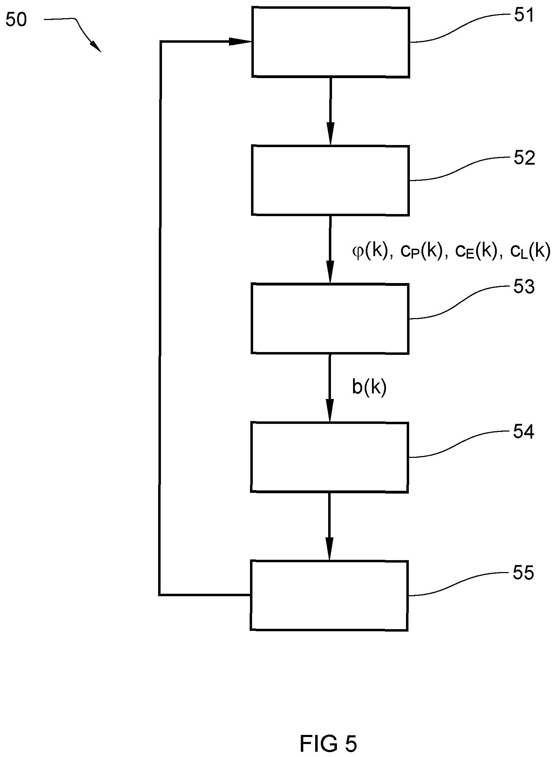

The correlation module 32 can comprise one or more correlation devices 320, e.g. one for each frequency band or frontend circuit. Referring to Fig. 5, each correlation device 320 is configured to perform the operations 50, which advantageously conform to the operations described in relation to Fig. 2, on all IF samples of a word that is input to the correlation device. In operation 51, a complete word 310 (length dependent on computer / bus system architecture) consisting of Ns IF samples is read from an address of RAM module 36 and written in a data structure, such as a register, of correlation device 320 through a transaction of the system bus 31. The word is advantageously input to the correlation device through a single bus transaction, e.g. the word 310 has a length equal to a width of the system bus 31, such as 16-bit or 32-bit.

According to an aspect of the present disclosure, the writing of a new word in the data structure of the correlation device 320 initiates a new set of correlation operations 52-55. In operation 52, a carrier phase replica cp(k) and a punctual PRN code replica c_{P}(k), and possibly one or more early (leading) PRN code replicas c_{E}(k) and one or more late (lagging) PRN code replicas c_{L}(k) are determined for each of the Ns IF samples of the word. In operation 53, all the Ns IF samples are rotated by the respective -ϕ(k) to produce baseband samples b(k) for the Ns IF samples. In operation 54, the obtained baseband samples b(k) are multiplied by the respective PRN code replica(s) determined in operation 52. In operation 55, the multiplication result is accumulated for each of the PRN code replica. The multiplication results are accumulated over a time period T, which may be equal to, or larger than Ns times the sampling period, i.e.: T ≥ Ns / Fs, with Fs the sampling frequency. In the latter case, the operations can be performed recursively until a complete accumulation result is obtained.

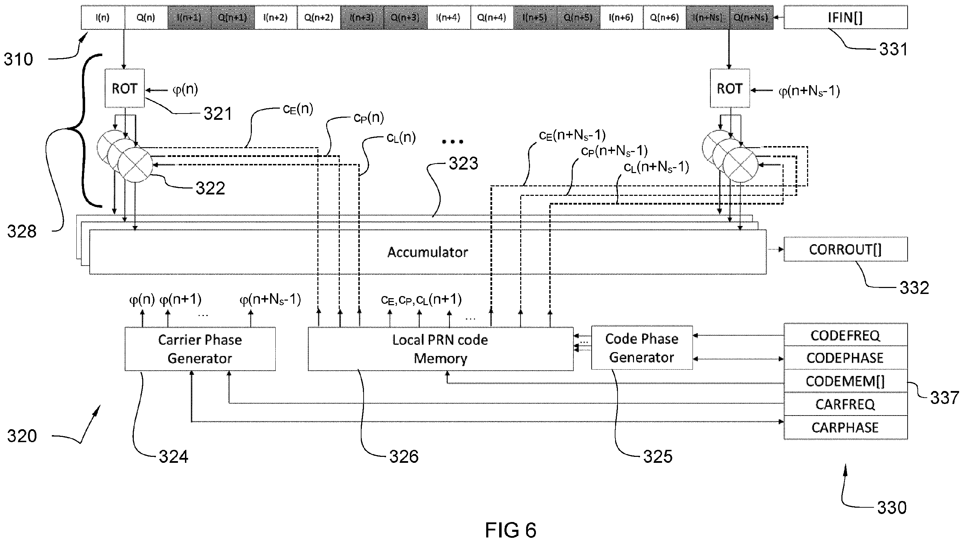

Referring to Fig. 6, the correlation device 320 comprises a set of data structures, such as buffers or registers 330 which interface with the system bus 31 of GNSS receiver 30, i.e. the system bus 31 is configured to access the registers 330 for read and/or write operations, as the case may be. Advantageously, the correlation device 320 is configured to operate (i.e. perform a chain of operations 50) solely from write access to the registers 330 to produce an accumulation result that is written in an output data structure, such as an output register 332, which can be accessed (read) through the system bus 31.

The set of data structures comprises an input data structure, such as an input register 331 (IFIN) configured to receive a complete word 310 of Ns IF samples. The length of input register 331 is hence equal to Ns times the bit count of one IF sample. In some examples, the word 310 is 32-bit and one IF sample is 4-bit; hence Ns is equal to 8. The system bus 31 writes one word at a time to input register 331, e.g. from an address of RAM module 36.

As an advantage, the correlation device 320 is configured to initiate (trigger) operations (e.g., the operations 50) by writing of a new IF sample word 310 to the input register 331. Each new IF sample word 310 written to the input register 331 is processed by correlation computation module 328. Specifically, for each new IF sample word 310 written to the input register 331, the correlation device 320 is configured to apply a carrier rotation (ROT) to the Ns IF samples to obtain Ns baseband samples. The correlation device is configured to multiply the baseband samples with one or more code replicas, e.g. (the early, punctual and late code replicas) to obtain a multiplication result. The multiplication result is added to the current value of the respective accumulator 323. The correlation device 320 is advantageously configured to apply the carrier rotation and/or to multiply the baseband samples in respect of all the Ns IF samples of word 310 in parallel, although sequential operation may be possible. To this end, correlation device 320 can comprise appropriate rotation module 321, multiplication module 322 and accumulator module 323.

The local carrier phase ϕ(n+i), i = 0,..., Ns-1 is provided by a carrier phase generator 324. The local code phase for the different code replicas c_{P}(n+i), c_{E}(n+i), c_{L}(n+i), i = 0,..., Ns-1 is provided by a code phase generator 325. The carrier phase generator 324 and the code phase generator 325 can be configured to update automatically, e.g. as soon as an IF sample word 310 has been processed by the correlation computation module 328, so as to be ready for the next IF sample word.

The correlation device 320 can comprise a local memory 326 storing PRN code replica, completely or in part. The correlation device may be configured to generate the PRN code replica internally, or to receive it from an external device, e.g. from RAM module 36 and storing it in the local memory 326.

The set of registers 330 can comprise one or more of the following registers:
CARFREQ, CARPHASE: these registers are utilized by the carrier phase generator 324 to determine a carrier phase value for each IF sample of the instant word 310 being processed by the correlation device 320; the value in these registers may be updated from time to time to take into account carrier frequency variations due to Doppler shift, e.g. by a signal tracking loop;
CODEFREQ, CODEPHASE: these registers are utilized by the code generator 325 to determine a code phase for each IF sample of the instant word 310 being processed by the correlation device 320; and
CODEMEM: a range of registers 337 to load PRN code chips in the local PRN code memory 326.
Advantageously, the values written in the above registers 330 allow the carrier phase and code phase generators to determine respective carrier phase and code phase for the IF samples of a sequence of words that are processed (written) successively by the correlation device 320. Particularly, they represent an initial phase for a first IF sample and a phase shift over one word. Advantageously, these registers are configured to be written by system bus 31 once at the beginning of each processing of a sequence of words, and may be updated from time to time to adjust the values to compensate for small shifts or variations detected by signal tracking.

To correlate over a time T, T*Fs IF samples must be processed, i.e. the correlation device must run T*Fs/Ns times. In other words, Nw = T*Fs/Ns words must be successively written to the input register 331 to produce multiplication results that are accumulated in the accumulator module 323. The current accumulated value of the accumulator module is advantageously available in an output register 332, which is accessible via the system bus 31. The output register 332 can hence be a working register of the accumulator module 323, which advantageously allows to read the correlation output at any time. The output register 332 can comprise separate registers for the punctual code replica and each of the offset code replicas (e.g., early, punctual and late). Alternatively, the output register 332 can be an independent register. The accumulator module 323 can be configured to write a current accumulated value to it at predetermined time intervals, e.g. after processing Nw words.

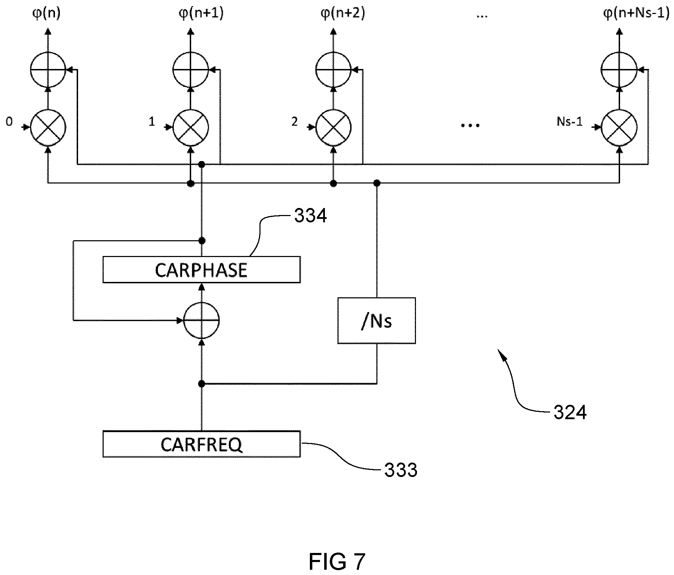

The carrier phase generator 324 may be implemented as in Fig. 7. The CARPHASE register 334 represents the phase rotation (ϕ(n)) that will be applied to the first IF sample of word 310. ϕ(n+i) is the phase rotation applied to the i^{th} sample of word 310 and can be computed as cp(n)+i*CARFREQ/Ns. For processing the next IF sample word that is written to the input register 331, e.g. after the update of the accumulator, the value of the CARPHASE register 334 is updated, advantageously by adding the value of the CARFREQ register 333 to the value of the CARPHASE register 334. The value of the CARFREQ register is hence advantageously selected to correspond with the change in carrier phase over one word (i.e., over Ns IF samples).

In one alternative implementation, the CARFREQ register 333 can comprise a value representative of a carrier phase shift over one IF sample. The carrier phases can then be determined by cumulatively adding this value to all the IF samples of the word, starting with the CARPHASE value for the first IF sample. Since the number of IF samples comprised in one word 310 is fixed, the CARPHASE register can easily be updated by incrementing its value with Ns*CARFREQ to prepare for the next word.

Advantageously, a value representative of an initial carrier phase, applied to the first IF sample in the first word 310 written to input register 331, is written to the CARPHASE register prior to writing the first IF sample word in input register 331. This allows correlation device 320 to start performing a correlation operation immediately upon writing an IF sample word to the input register 331. Furthermore, the system bus needs to write the CARPHASE and CARFREQ values in the corresponding registers only once for an entire sequence of words, except to compensate for variations in carrier frequency, e.g. as detected by a signal tracking control loop. The outputs of the carrier phase generator 324 are coupled to the rotation block 321 of correlation computation module 328.

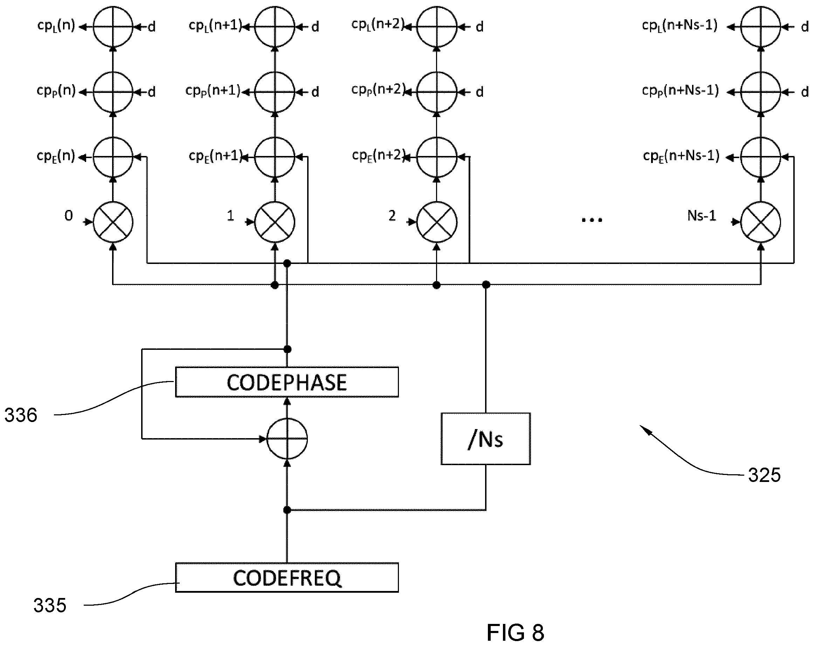

The code phase generator 325 may be implemented as in Fig. 8. The CODEPHASE register 336 can be a fixed-point representation of the code phase. For example, the CODEPHASE register may have a width of 48 bits, with the 16 most significant bits (MSB) containing the integer part of the code phase (the chip number), and the 32 least significant bits (LSB) the fractional part (the phase within the chip).

The CODEPHASE register 336 can represent the code phase of a code replica at the epoch of the first IF sample of the word written in input register 331, which may be the punctual code replica, or alternatively a time-offset code replica, such as the early replica cp_{E}(n) as illustrated in Fig. 8. cp_{E}(n+i) is the code phase corresponding to the early code replica of the i^{th} IF sample of the word in the input register, and can be computed as cp_{E}(n)+i*CODEFREQ/Ns. The value of the CODEFREQ register 335 hence represents the code phase shift over one word 310 (i.e., over Ns IF samples). Any other time-offset code phase, e.g. punctual and late code phases can be computed by adding or subtracting respective offsets to (from) the code phase represented in the CODEPHASE register 336. In Fig. 8, the punctual code phases are computed by adding a fixed offset d to the computed early code phase values of each IF sample, and the late code phases are computed by adding a fixed offset d to the punctual code phase values of each IF samples. Additional phase-shifts may be implemented as desired. For processing the next IF sample word that is written to the input register 331, e.g. after the update of the accumulator, the value of the CODEPHASE register 336 is advantageously updated, e.g. by adding the value of the CODEFREQ register 335. By so doing, the code phase generator is prepared to determine the code phase of the next batch of Ns samples (next word 310).

In one alternative implementation, the CODEFREQ register 335 can comprise a value representative of a phase shift over one IF sample. The code phases can then be determined by cumulatively adding this value to all the IF samples of the word, starting with the CODEPHASE value for the first IF sample. Since the number of IF samples comprised in one word 310 is fixed, the CODEPHASE register can easily be updated by incrementing its value with Ns*CODEFREQ to prepare for the next word.

Advantageously, a value representative of an initial code phase, applied to the first IF sample of the first word 310 of a sequence of words written to input register 331, is written to the CODEPHASE register 336 prior to writing the first word 310 in input register 331. This allows correlation device 320 to start performing a correlation operation immediately upon writing an IF sample word to the input register 331. Furthermore, the system bus needs to write the CODEPHASE and CODEFREQ values in the corresponding registers only once for an entire sequence of words, except to compensate for variations in code frequency, e.g. as detected by a signal tracking control loop.

The code phase generator is advantageously coupled to local PRN code memory block 326 to generate the correct code sample at an output of the memory block 326. The integer part of the code phase (the chip number) of the CODEPHASE register 336 is advantageously used as index in the local PRN code memory block 326. Updating the CODEPHASE register 336 after processing of one word will automatically update the index at which memory block 326 should be read. The outputs of the memory block 326 are coupled to the multiplier blocks 322 of the correlation computation module 328.

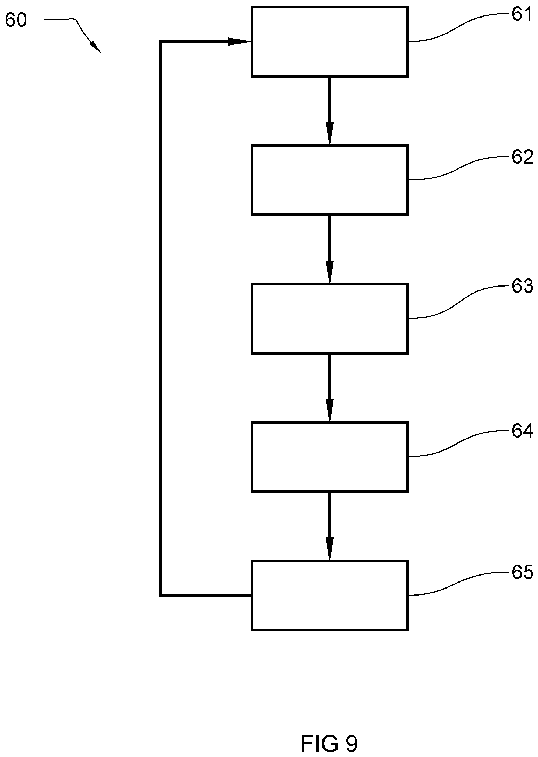

Referring to Fig. 9, a control sequence 60 for operating the correlation device 320 can comprise the following chain of operations. In operation 61, the data structures of the correlation device are initialized. This may comprise writing initial values allowing to generate the carrier phases and the code phases, e.g. by carrier phase generator 324 and code phase generator 325, for Ns IF samples of a first word that will be processed. In some examples, operation 61 comprises writing the initial carrier phase and initial code phase to the CARPHASE and CODEPHASE registers 334 and 336 respectively, and writing a carrier phase shift value and a code phase shift value to the CARFREQ and CODEFREQ registers 333 and 335 respectively, which may represent a respective phase shift over one or more, e.g. Ns, IF samples. Operation 61 is advantageously carried out by the system bus.

In operation 62, the applicable PRN code segment is determined. In some examples, the code segment is written to the CODEMEM registers 337, e.g. through one or more transactions of the system bus. The applicable code segment can e.g. be retrieved from RAM module 36, of from a remote network, such as a cloud network. Alternatively, the PRN code segment is generated locally by an internal circuit of correlation device 320.

In operation 63, one or more, particularly Nw = T*Fs/Ns words, each comprising Ns IF samples, are written successively to the input data structure, e.g. input register 331, where T is the desired correlation duration and Fs is the IF sampling frequency. The words can be retrieved from any local or remote data storage system, e.g. from RAM module 36, where they can be stored in a contiguous address range. In some examples, the plurality of Nw words are written to the input data structure by a chain of successive system bus transactions. Advantageously, intermediate local storage of words in the correlation device 320 is avoided, and the input register 331 is configured to store just one word. In operation 64, for each IF sample word written to the input register 331, rotation, multiplication and accumulation operations as described in relation to the chain of operations 50 are carried out by the correlation device 320. Advantageously, the writing of an IF sample word 310 to the input register 331 triggers the operation 64, including the operations of the correlation computation module 328. Advantageously, the correlation computation module 328 is configured to perform its operations on a complete word at a rate which is at least equal and possibly higher than the rate at which the system bus 31 is writing new words to the input data structure. Operation 64 advantageously comprises, for each of the Nw words, a cumulative update of the initial values allowing to generate the carrier phases and the code phases, e.g. by carrier phase generator 324 and code phase generator 325, for the next word. In operation 65, the output registers 332 (CORROUT) are read to retrieve the correlation values, e.g. by the system bus. Optionally, the CARPHASE and CODEPHASE registers 334 and 336 respectively are read to retrieve the carrier phase and code phase end values, such that these may be available for a successive batch of IF samples (words), without the need to compute them again.

Advantageously, the chain of operations 61-65 is repeated for another signal, e.g. from another satellite of the GNSS constellation. The control sequence 60 is advantageously controlled by a DMA controller 34.

The uploading of IF sample words (operation 63) is typically the dominant operation in the control sequence 60. Loading the PRN code segment (operation 62) can be shorter, as there are usually 2 to 20 IF samples per PRN chip, and the PRN code is typically coded on fewer bits than the IF samples.

It will be appreciated that the local code memory block 326 does not necessarily need to hold a full period of a PRN sequence. The local code memory block 326 can be a buffer which is loaded during the control sequence 60, e.g. in operation 61, to support the correlation process. The CODEPHASE register 336 can be interpreted as the chip-count and hence as the index for the code memory block 326 and can be offset relative to the absolute chip number of a satellite's PRN code.

By so doing, the correlation device 320 is extremely flexible compared to implementations which embed signal design parameters in the hardware implementation. The uploaded code segments can even correspond to non-periodic cryptographic codes. Next to flexibility, a smaller code memory also offers area and power dissipation advantages. For instance, a code memory of 1024 chips can be used to process a 10230-chip correlation (e.g. for the GPS L5 signal). The correlation is just to be sub-divided in 10 sub-correlations with 1023 chips, each time uploading the right segment to the code memory 326. The CPU would have to sum the 10 sub-correlations produced by the correlation device 320 and configure initial code and carrier phases for each segment, but the associated overhead remains small.

The code memory block 326 can use single bit chips, representing a multiplication with 1 or -1. Alternatively, it can comprise tri-valued chips (-1,0,1) encoded on two bits. This enables correlation with time-multiplexed codes and watermark codes, inserting blanks at the non-applicable time slots.

Some GNSS signals use a so-called binary offset carrier (BOC). For these signals, the PRN code chips are modulated by a fixed pattern. For instance, for BOC(1,1) (e.g. in GPS L1C) a logic 1 is replaced by 10, and a logic 0 by 01. This pattern should be reflected in the local signal to support a direct correlation. There are several ways to do this, which are known to the skilled person. A trivial way is to write the entire pattern after substitution in the local code memory 326, as if it were the actual PRN code. A code of 1 0 1 1 would be replaced by 1 0 0 1 1 0 1 0 in this case, for BOC(1,1). Alternatively, the pattern can be generated as a function of the fractional part of the code phase, for instance via a look-up table. The output of this function can then be used to modulate the corresponding PRN chip (e.g. via XOR-operation). This function can be configured via an additional configuration register, e.g. in the first steps of the correlation sequence. The latter method reduces data traffic and storage space for the PRN-code templates in system memory but adds some complexity to the design.

### Navigation symbol handling

The correlation values obtained by the above methods and devices correspond to the correlation between the segment of the PRN code stored in the local memory 326 of the correlation device (initialized with the CODEMEM registers 337) and the IF samples dumped to the input register 331.

In GNSS satellites, the PRN code can further be modulated at a lower rate (e.g. 1 kHz) by navigation or secondary-code symbols. If the symbol is "0", the PRN code is transmitted as is. If the symbol is "1", the sign of all PRN code chips is inverted. To avoid correlation losses caused by sign changes in the received PRN code, it is advantageous to synchronize the correlation with the symbol transitions.

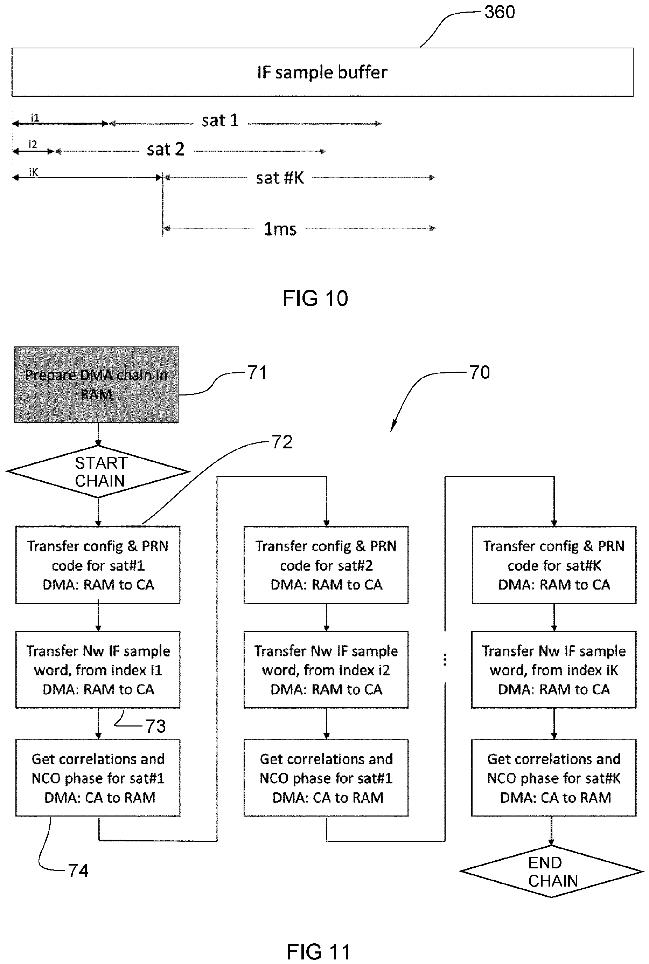

There are multiple ways to do so. For example, the first IF samples provided to the correlation device can be aligned with a symbol transition. If a symbol transition occurs at sample index i1 for satellite 1, i2 for satellite 2, etc., the correlation for different satellites would then be carried out over different IF sample windows, as illustrated in Fig. 10. Fig. 10 illustrates the case where the symbol rate is 1 kHz, and correlation is computed over 1 ms interval aligned with the received symbols. This means that, for different satellites, the IF sample words dumped to the input register 331 are taken from different starting addresses in RAM module 36 The first word to be dumped for satellite N is the word containing sample index iN. It will be appreciated that the sample at indexes iN is not necessarily the first sample in that first word. Likewise, the last sample of the correlation window may not be the last sample in the last of the Nw words. The extra samples at the beginning of the first word and at the end of the last word cause a minor correlation loss, acceptable in most cases. This can be avoided by extending the local code with a short prefix and/or suffix, to encode a state which blanks the correlation with code samples out of the correlation window. A suitable encoding involves a tri-valued PRN code (-1, 0, 1), such as in time-multiplexed codes, inserting blanks at the non-applicable time slots.

Another possibility is to store and reset the correlation device each time the code phase is a multiple of the symbol duration. For example, if the symbol rate is 1kHz, the correlation device resets each time the code phase is a multiple of 1 millisecond.

### DMA chain

Referring again to Fig. 3, DMA controllers 34 are used to transfer large amounts of data between system memory ranges and/or interface controller buffers. They offload the CPU cores, as these do not need to spend CPU time in copying data from one location to another. A DMA controller can be configured by writing one or more descriptors of the desired transactions, e.g. by a CPU 33. These transactions will copy data to or from an incrementing address if a memory range is concerned and will keep the transaction address fixed if data is to be dumped or gathered from an interface controller. The interaction to interfacing controllers is often managed with handshaking signals, which will notify the DMA controller if the interface has new data available or is ready to receive new data. The DMA controller will then gather or provide the interface data and provide an acknowledge signal, notifying the data request is addressed. In some cases, the handshaking signals can be disabled, which is referred to as "autobauding". In this case, the DMA controller will transfer the data to or from the destination address as fast as the bus arbitration system and its internal arbitration allows. Transactions between memory ranges on the other hand, never use handshaking signals, but directly transfer data to and from incrementing addresses. DMA controllers typically have multiple channels to handle several streams simultaneously, with internal arbitration. They often also support chaining, sometimes referred to as scatter-gather, which allows to concatenate multiple transaction sequences according to their descriptors stored in memory.

It will be appreciated that the operations described in control sequence 60 in relation to Fig. 9 to control the correlation device only involve transfers from the system RAM memory 36 to the correlation device 320, and vice versa. This can be performed by the CPU 33, or can advantageously be executed by the DMA control module 34, advantageously without CPU involvement.

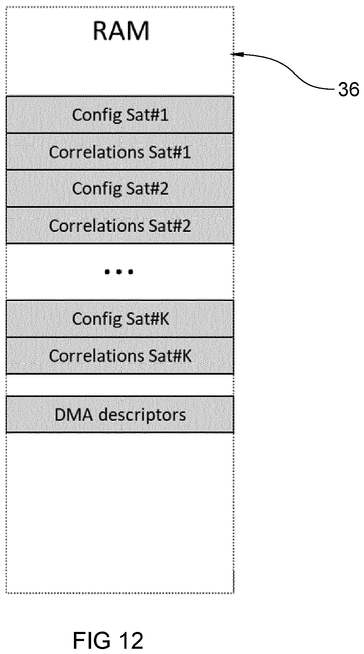

Advantageously, the operation and sequencing of the correlation devices is driven by a chain 70 of DMA transactions, as represented in Fig. 11. In an initialization operation 71, the CPU 33 prepares the DMA transfer chain 70. This includes one or more of the following:
- preparing memory blocks in RAM module 36 comprising the values to be sent to the CARFREQ, CARPHASE, CODEFREQ, CODEPHASE and CODEMEM registers for all the desired satellites or signals;
- reserving memory regions in RAM module 36 to receive the correlation values from the CORROUT register 332; optionally to receive the end values of the CODEPHASE and/or CARPHASE registers 336 and 334 respectively;
- preparing the DMA descriptors to define the DMA chain 70; in particular, for each satellite or signal, the descriptor comprises an offset or mark indicating from which IF sample word to start (word comprising i1, i2, ... iK).
The different memory blocks to be prepared are illustrated in Fig. 12.

Referring again to Fig. 11, once the initialization operations 71 are performed, the DMA chain 70 can start as soon as a buffer of IF samples is ready in RAM module 36.

The following operations are performed by the DMA control module 34, successively for each of K satellites. In operation 72, DMA control module 34 copies the CARFREQ, CARPHASE, CODEFREQ, CODEPHASE registers from RAM to the corresponding registers 333-336 of the correlation device 320. DMA control module 34 further copies the (segment of) PRN code from RAM 36 to the CODEMEM register 337. In operation 73, DMA control module 34 copies a total of Nw IF sample words from RAM module 36 to the input data structure (input register 331) of the correlation device, advantageously starting at the word index contained in the DMA descriptor. The Nw IF sample words can be written successively to the input data structure, advantageously in a plurality of (Nw) bus transactions, and may be written in a single data stream via the system bus. In the present disclosure, a transaction may be defined as the process of transferring one word from RAM 36 to the input data structure of the correlation device. In one aspect of the present disclosure, the correlation device processes each IF sample word as soon as it is fed by the system bus, i.e., as soon as the word arrives in the input register 331. Hence, the writing of an IF sample word 310 to the input register 331 advantageously triggers the operations of the correlation computation module 328 of correlation device 320. One advantage of doing so is that the progress of the correlation operations is entirely determined by the rate at which IF samples words are fed into the input data structure. Contrary to the prior art, such as e.g. Tran *et al.,* the correlation device is not clocked at a fixed rate. Instead, correlations are updated each time a new word is pushed. This makes is very flexible to operate both in real-time or in post-processing mode. The CPU module 33 or the DMA module 34 do not need to feed new IF words at a fixed rate. If other high-priority tasks need to be performed, the writing of new words to the input data structure can be interrupted. This is not problematic and correlation can simply resume at the next write access.

In operation 74, DMA control module 34 controls the system bus 31 to copy the CORROUT registers 332 of correlation device 320 to RAM module 36, e.g. once all Nw words have been processed by correlation device 320. At the end of the chain 70, all correlation values are available in RAM module 36 and accessible for further processing.

To allow DMA transfers where the Nw IF samples are written to incrementing addresses, the input register may be mapped to a range of addresses, instead of a single address. Specifically, some DMA modules may be configured to write IF sample words in successive addresses (A1, A2=A1+1, A3=A2+1, etc.). In that case, the triggering of the correlation operations is linked to writing to A1, or A2, or A3, etc. instead of only to A1.

### Real-time operation

One advantage of the correlation device and the DMA chain 70 described above is that they are suited for both post-processing and real-time operation. In post-processing (e.g. in the case of watermark codes), the IF sample buffer 360 in RAM module 36 is processed by the DMA chain without strict real-time constraints. This mode does not require more than a single IF sample buffer in RAM. Once all relevant information is available (e.g. cryptographic keys), the DMA chain can be started and correlations are available shortly afterwards, which may be used to adjust subsequent correlations, gradually advancing in the IF sample buffer.

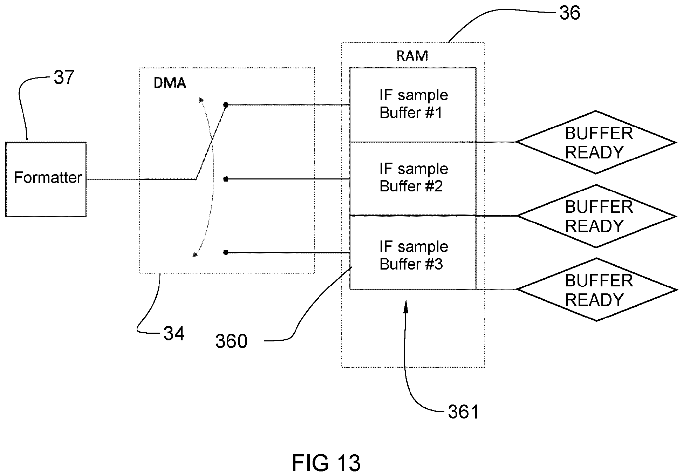

Referring to Fig. 13, for continuous real-time operation, it is advantageous to maintain a circular queue 361 of multiple IF sample buffers 360 in RAM instead of a single buffer. At any time, one of the IF sample buffers in the queue 361 is being filled, while at least one of the others are processed by one or more correlation devices 320. In an example with a queue 361 of three IF sample buffers 360, as shown in Fig. 13, the three IF sample buffers are filled in sequence, advantageously through transactions of DMA control module 34 for minimal involvement of the CPU.

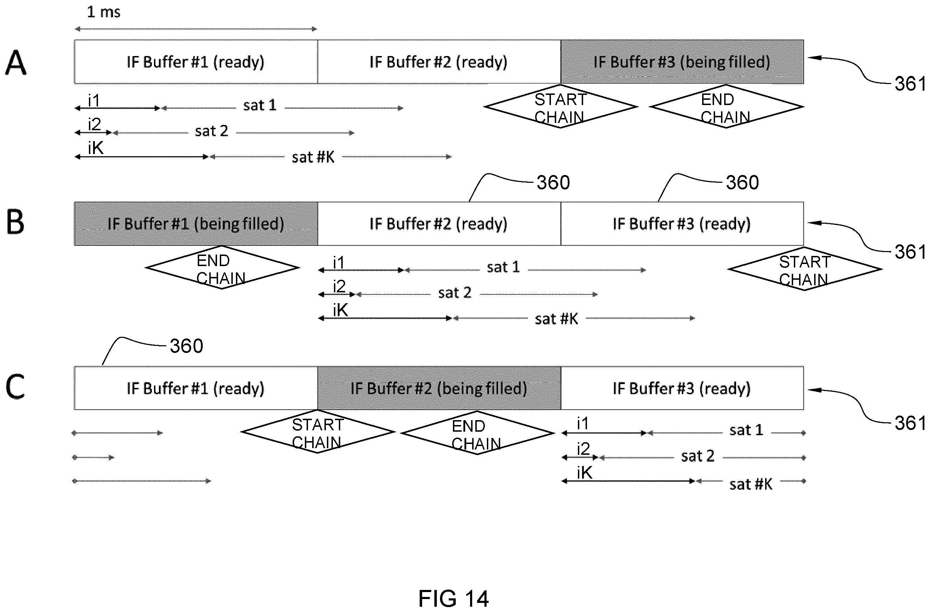

Fig 14 shows an example where the three circular IF sample buffers 360 of Fig. 13 each cover 1ms and three successive correlation values can be computed for satellites 1..K. In cycle A, the DMA chain 70 starts when buffer#2 is ready. It computes the correlations for sat 1..K over IF samples stored partially in buffer#1 and buffer#2 over a 1ms time span. One millisecond later, in cycle B, the DMA chain restarts, and now computes the correlations over IF samples stored partially in buffer#2 and buffer#3 over a 1ms time span. In cycle C, correlations are computed over IF samples stored partially in buffer#3 and buffer#1 over a 1ms time span. This process can continue indefinitely. The number K of satellites in the chain is advantageously selected such that the chain is completed within the time needed to fill the buffers, i.e. the "END CHAIN" event occurs before the next buffer is filled. It will be appreciated that suitable starting indexes can be utilized for each satellite i1, i2, ..., 1K, in each buffer. At each cycle and for each satellite, the correlation operations start at the IF sample where the previous cycle ended.

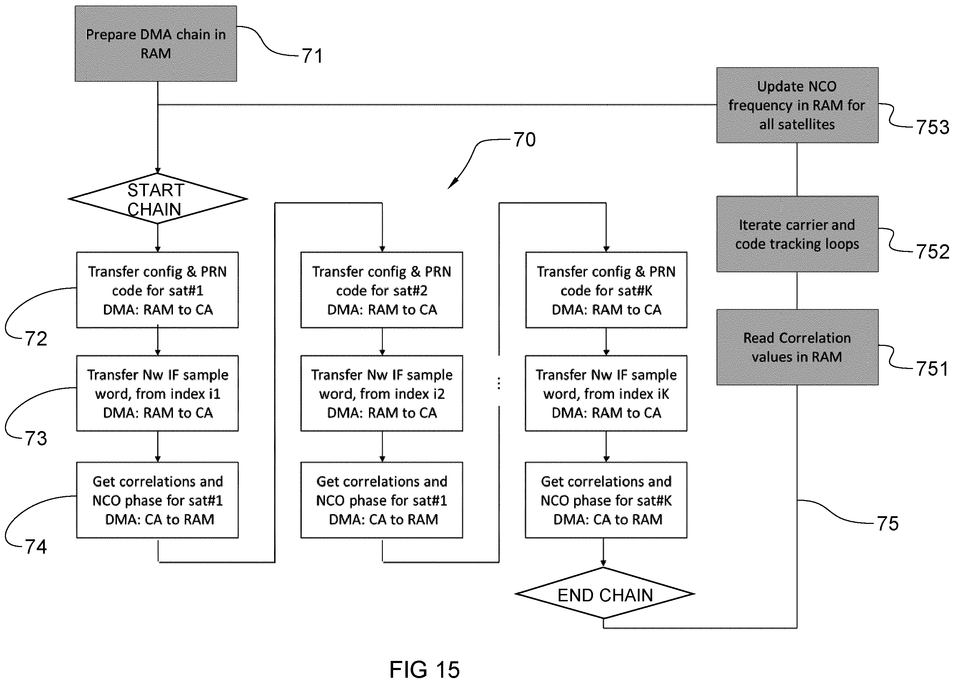

Referring to Fig. 15, the flow of Fig. 11 is modified in that, after the completion of the DMA chains 70 in respect of all navigation signals (satellites), a tracking loop 75 is executed before a next run of the DMA chains with new IF samples. The tracking loop 75 can comprise an operation 751 in which the CPU processes the correlation values that were read from the correlation module 32 and written in RAM module 36 by DMA operation 74. Tracking loop 75 can comprise an operation 752 in which carrier and/or code tracking loops can be iterated, e.g. to adjust carrier frequency and code frequency, respectively. Tracking loop 75 can comprise an operation 753 to update the carrier and/or code frequency in RAM module 36, e.g. with the values obtained in operation 752. This can include updating the registers in RAM module 36, that will be written to the CARFREQ, and CODEFREQ registers 333, 335 of the correlation device, so as to be ready for the next run of the chain. It will be appreciated that the DMA operation 74 can include reading of the end values of the CARPHASE and CODEPHASE registers 334, 336, (i.e., as utilized for the last word in a run of the DMA chain) and updating the corresponding registers in RAM module 36 to be ready for the next run of the DMA chain. Note that operation 71 to "Prepare DMA chain in RAM" need only to be performed once. This operation sequence is typical in continuous real-time operation.

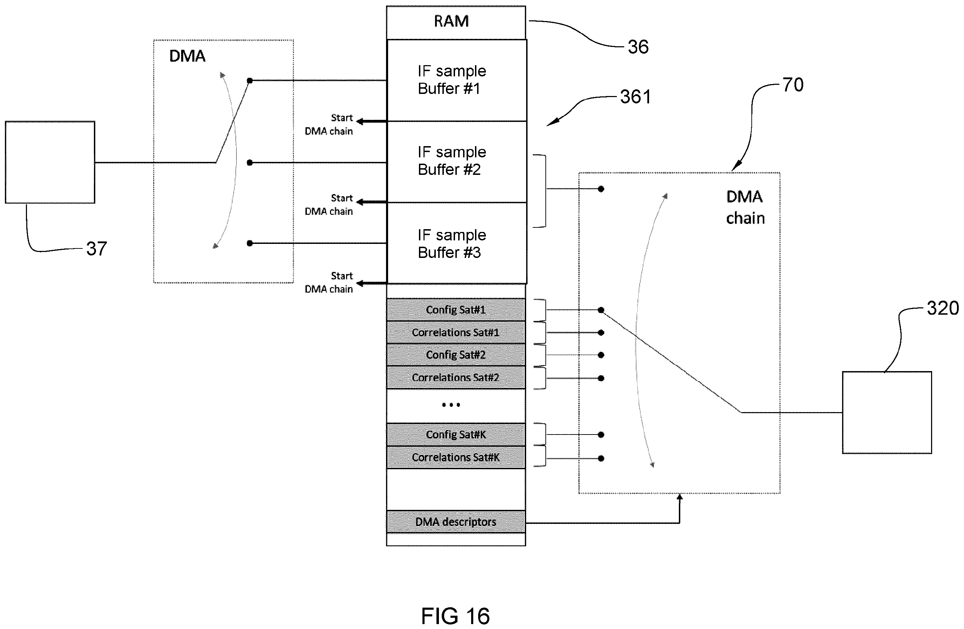

Fig. 16 provides a complete overview of the DMA data flows as described above corresponding to a circular triple-buffer architecture.

The correlation module 32 can be equally used for post-processing of non-periodic or watermark codes as for real time operation. Post-processing mode and continuous real-time mode can be combined on a single correlation device, feeding data from a static IF buffer with data to be post-processed into the correlation device after the real-time processing completed. Switching between these different modes of operation can be fully controllable through DMA, with no CPU overhead.

The maximal throughput the correlation device needs to support depends on the system capabilities and requirements. In some systems, a bus transaction may take several clock cycles and/or the DMA controller may first have to fetch data from memory in one transaction before it can be pushed towards the correlation device in another transaction on word-by-word basis. In these cases, the time between consecutive transactions towards the correlation device may be several clock cycles, allowing a partially sequential implementation. For instance, if access requires two clock cycles, the correlation (and local code) can be calculated in two stages, each of them considering IF sample words of half the system bus width. This situation can also be created by inserting bus wait states, if silicon area is more important than throughput.

In other systems, the DMA controller may be able to provide data in burst transactions at a throughput of one system word per clock cycle. Standard digital design techniques, like the introduction of pipelining registers between some of the operations allow to take advantage of this and maximize throughput. For example, in a 400-MHz system with a correlation device with input register Ns=8 and a DMA controller using one clock cycle to fetch a word from RAM and another clock cycle to push it to the correlation device, throughput rates of 400*8/2 = 1600 Msps could in theory be achieved. Considering an IF sampling rate of 20 MHz, this would in theory be sufficient to process 80 GNSS signals in real time. In practice, the throughput is slightly lower as a DMA controller would typically also be handling other transactions and part of the bus bandwidth (particularly to the memory) would be needed for the CPU. Uploading PRN code segments as well consumes bus bandwidth, but this is typically much less than the IF sample data traffic as explained earlier.

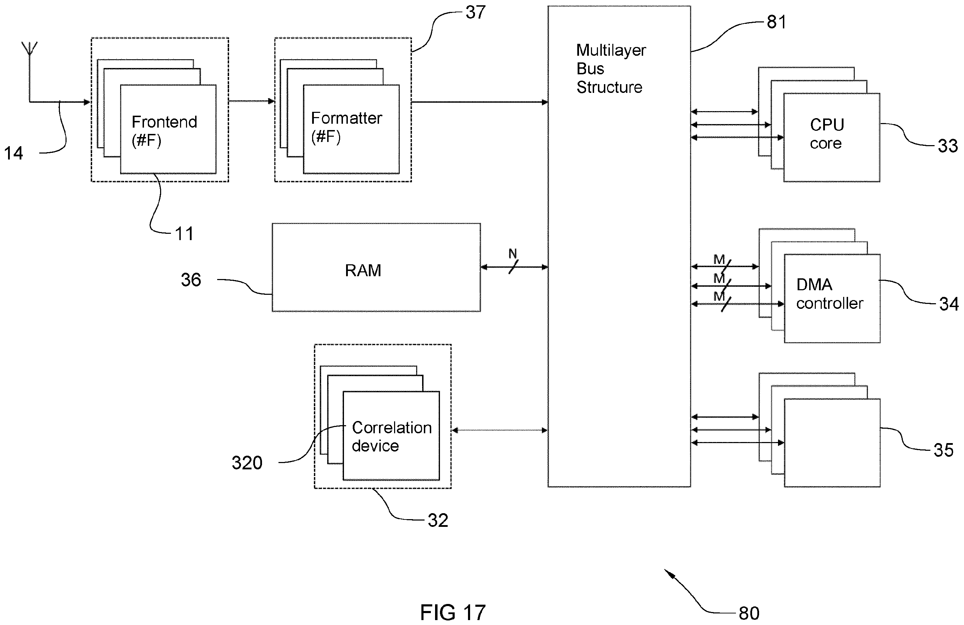

The throughput can be increased with a DMA controller with two or more interfaces to a multilayered bus structure. For example, Fig. 17 illustrates a GNSS receiver system 80 where a multilayer bus 81 supports N parallel streams to the system RAM module 36, and M parallel streams to the DMA control module 34. Such architecture allows, for example, to simultaneously fetch data from the memory and push previously fetched data to the correlation module 320.

In some examples, the CPU module 33 never accesses the correlation devices directly. The correlation module can be designed to be independent on the CPU core, without requiring any custom adaptation of the core. In an initial phase, the CPU can prepare the DMA chains in RAM. During tracking, the CPU would only need to regularly update the code and carrier phase and frequency as it would do for a parallel channel, except that the new values are stored in RAM. The DMA chain advantageously takes care of all the communication to and from the correlation devices. This allows reducing the complexity of the GNSS receiver with no impact on the CPU load.

While in the foregoing description, aspects of the present disclosure have been illustrated in relation to GNSS signals, it will be appreciated that the present disclosure can equally be applied to other types of navigation signals, such as terrestrial navigation signals, or low earth orbit navigation signals, and more generally to any positioning, navigation and timing (PNT) signal.

## Claims

1. A signal correlator system (30), comprising:
a system bus (31),
a central processing module (33) connected to the system bus,
a correlator module (320) connected to the system bus, wherein the correlator module is configured to perform a correlation between first batches of received signal samples (110) and second batches of code samples of a local replica of a spreading code, wherein the correlator module comprises:
a carrier phase generator circuit (324) configured to determine carrier phases corresponding with each of the received signal samples of the first batches,
a code generator circuit (326, 325) configured to determine each of the second batches of the code samples,
a correlation computing circuit (328) configured to correlate the received signal samples of one of the first batches with the code samples of a respective one of the second batches thereby obtaining a correlation output, and
an accumulator circuit (323) configured to accumulate correlation outputs in respect of a plurality of the first batches,
wherein the signal correlator system is configured to feed the first batches as words (310) to the correlator module via the system bus, wherein each of the words consists of a predetermined number of the received signal samples (110), and
wherein the correlator module is configured to trigger operations configured to obtain the correlation output each time one of the words is fed by the system bus.

2. The signal correlator system of claim 1, wherein the system bus (33) has a width being an integer multiple of a bit size of each of the words, preferably wherein the system bus has a width equal to a bit size of each of the words.

3. The signal correlator system of any one of the preceding claims, wherein the correlator module (320) comprises an input data structure (331) configured to receive the words from the system bus, and an output data structure (332) readable by the system bus, wherein the input data structure is coupled to the correlation computing circuit (328) and wherein an output of the accumulator circuit (323) is configured to be written to the output data structure.

4. The signal correlator system of any one of the preceding claims, wherein the correlator module (320) is configured to trigger an update of a state of the carrier phase generator circuit (324) and/or of a state of the code generator circuit (325, 326) each time one of the words is fed by the system bus, preferably the correlator module is configured to trigger the update of the state of the carrier phase generator circuit and/or of the state of the code generator circuit (325, 326) following the correlation computing circuit completing the correlation operations in respect of the one of the words.

5. The signal correlator system of any one of the preceding claims, wherein the code generator circuit comprises:
a data memory structure (326) configured to comprise at least a portion of the local replica of the spreading code,
a first code register (336) configured to comprise a value representative of a code phase index allowing to determine a first code phase in respect of a predetermined one of the code samples, and
a second code register (335) configured to comprise a value representative of a code phase shift over a predetermined number of the code samples, wherein, for each consecutive one of the words supplied to the correlator module via the system bus, the code generator circuit is configured to increment the value of the first code register by an amount representative of a code phase shift over an entire word of the received signal samples based on the value of the second code register.

6. The signal correlator system of any one of the preceding claims, wherein the carrier phase generator circuit (324) comprises:
a first carrier register (334) configured to comprise a value representative of a carrier phase index allowing to determine a first carrier phase in respect of a predetermined one of the received signal samples, and
a second carrier register (333) configured to comprise a value representative of a carrier phase shift over a predetermined number of the received signal samples,
wherein, for each consecutive one of the words supplied to the correlator module via the system bus, the carrier phase generator circuit is configured to increment the value of the first carrier register by an amount representative of a carrier phase shift over an entire word of the received signal samples based on the value of the second carrier register.

7. The signal correlator system of any one of the preceding claims, further comprising a direct memory access control module (34) operably coupled to the system bus and to the central processing module, wherein the direct memory access control module is configured to be implemented with executable program code configured to execute a sequence of transfer of the words from a data storage device (36) to the correlator module, preferably wherein the executable program code is configured to write initial values defining initial states of the carrier phase generator circuit and of the code generator circuit to memory data structures (333-337) of the correlator module before each sequence of transfer.

8. The signal correlator system of any one of the preceding claims, configured to maintain a circular queue (361) of buffers of the received signal samples in a data storage device (36), wherein the signal correlator system is configured to execute a sequence of instructions configured to transfer the received signal samples as words from one or more buffers of the circular queue to the correlator module and to push new ones of the received signal samples into another one of the buffers in the circular queue.

9. A navigation receiver, comprising the signal correlator system of any one of the preceding claims, preferably further comprising:
an input device configured to capture a radio frequency signal, preferably a radio frequency antenna (14),
a frontend circuit (11) coupled to the input device and configured to convert the radio frequency signal to a stream of the received signal samples,
preferably, a formatter circuit (37) configured to pack the stream of the received signal samples in the first batches, wherein the formatter circuit is coupled to the system bus, and
preferably, a system memory module (36) configured to store the first batches as words, preferably in a contiguous address range.

10. A correlator module (320) configured to be connected to a system bus of a computer system, wherein the correlator module is as recited in any one of the claims 1 to 8.

11. A method (50, 60) of correlating received signal samples (110) with code samples of a spreading code replica, the method comprising:
packing first batches of the received signal samples as words, wherein each of the words consists of a predetermined number of the received signal samples,
feeding the words to a signal correlator circuit via a system bus, preferably the system bus has a width being an integer multiple of a bit size of each of the words, preferably wherein the system bus has a width equal to a bit size of each of the words,
for the received signal samples of each word, determining respective carrier phase values and respective code samples of the spreading code replica and computing, by the signal correlator circuit, a correlation of the received signal samples of each word with the respective code samples to obtain a correlation output, and
accumulating the correlation outputs computed in respect of a plurality of the words to obtain an accumulated output,
wherein feeding a respective word to the signal correlator circuit triggers computing the correlation of the received signal samples of the respective word by the signal correlator circuit,
preferably wherein the carrier phase values and the code samples of the spreading code replica are updated each time one of the words is fed to the signal correlator circuit, preferably wherein computing the correlation of the received signal samples of the respective word by the signal correlator circuit triggers updating the carrier phase values and the code samples of the spreading code replica in respect of a subsequent one of the words.

12. Method of the preceding claim, wherein determining the respective code samples of the spreading code replica comprises determining respective code phase values based on a code index value representative of a code phase in respect of a predetermined one of the code samples and on a code phase shift value representative of a code phase shift over a predetermined number of the code samples, wherein determining the code samples in respect of a subsequent one of the words comprises incrementing the code index value by applying a phase shift determined based on the code phase shift value,
and/or
wherein the respective carrier phase values are determined based on a carrier index value representative of a carrier phase in respect of a predetermined one of the received signal samples and on a carrier phase shift value representative of a carrier phase shift over a predetermined number of the received signal samples, wherein determining the carrier phase values in respect of a subsequent one of the words comprises incrementing the carrier index value by applying a phase shift determined based on the carrier phase shift value.

13. Method of claim 11 or 12, further comprising:
capturing a radio frequency signal and downconverting the captured radio frequency signal to an intermediate frequency signal,
digitalizing the intermediate frequency signal to obtain the received signal samples (110).

14. Method of any one of the claims 11 to 13, wherein the received signal samples comprise one or more navigation signals, preferably one or more global navigation satellite system signals.

15. Method of the preceding claim, wherein the received signal samples are sequentially correlated with code samples of spreading code replicas in respect of multiple navigation signals, preferably wherein for each of the multiple navigation signals, the words are stored in a data storage device and are fed from the data storage device to the signal correlator circuit starting from a different sample index in the data storage device.
